(19) Europäisches Patentamt
European Patent Office
Office européen des brevets

(11) Veröffentlichungsnummer: **0 126 891**
**B1**

(12) # EUROPÄISCHE PATENTSCHRIFT

(45) Veröffentlichungstag der Patentschrift: **05.02.86**

(51) Int. Cl.⁴: **C 07 C 103/37**, C 07 C 103/38, A 01 N 37/36, A 01 N 39/04

(21) Anmeldenummer: **84103357.4**

(22) Anmeldetag: **27.03.84**

(54) **Alpha-alkoxylierte N-(3,3,5-bwz. 3,5,5-Trimethylcyclohexen-1-yl)-N-alkyl- oder -N-allyl-acetamide und deren Verwendung in phytotoxischen Zubereitungen.**

(30) Priorität: **27.05.83 DE 3319187**

(43) Veröffentlichungstag der Anmeldung: **05.12.84 Patentblatt 84/49**

(45) Bekanntmachung des Hinweises auf die Patenterteilung: **05.02.86 Patentblatt 86/6**

(84) Benannte Vertragsstaaten: **AT BE CH DE FR GB IT LI LU NL SE**

(56) Entgegenhaltungen:
**EP - A - 0 013 429**
**EP - A - 0 020 859**
**EP - A - 0 113 030**
**EP - A - 0 123 996**
**FR - A - 2 385 686**

(73) Patentinhaber: **HÜLS AKTIENGESELLSCHAFT, Patentabteilung / PB 15 - Postfach 13 20, D-4370 Marl 1 (DE)**

(72) Erfinder: **Bellut, Hans, Dr., Bergstrasse 50, D-4408 Dülmen (DE)**
Erfinder: **Baltruschat, Horst, Dr., Am Hagenbach 3, D-4405 Nottuln (DE)**
Erfinder: **Schnurbusch, Horst, Dr., Overwegstrasse 36, D-4690 Herne 1 (DE)**

**EP 0 126 891 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1986

**Beschreibung**

N,N-disubstituierte α-Halogenacetamide sind Stoffe, die sich durch fungizide und herbizide Wirkungen auszeichnen(vgl. R. Wegler 'Che-mie der Pflanzenschutz- und Schädlingsbekämpfungsmittel', Band 8, Heidelberg 1882, sowie K. H. Büchel 'Pflanzenschutz und Schädlings-bekämpfung', Stuttgart 1877).

So beschreibt z. B. die DE-PS 16 18 644 N-(Cycloalken-1-yl)-α-chloracetamide mit einem breiten Spektrum herbizider und phytoto-xischer Wirksamkeit bei Zuckerrüben sowie in Baumwoll-, Mais- und Reiskulturen.

Gegenstand der DE-OSS 28 56 651 und 29 40 231 sind N-Cyclopentyl-und -hexenyl-N-alkyl- bzw. -N-allyl-acetamide, die in α-Stellung durch Halogen- oder Methylreste substituiert sind. Diese Verbindun-gen sind vor allem für den Einsatz in dikotylen Kulturpflanzen, wie Winterraps (Brassica rapa), Zuckerrüben (Beta vulgaris), Soja (Soja hispida) und Baumwolle, geeignet. Es gelang indessen nicht ebenso befriedigende Ergebnisse beiden Getreidearten wie Weizen (Triticum aestivum), Roggen (Secale cereale), Hafer(Avena sativa) und Gerste (Hordeum vulgare) zu erzielen.

Es ist bekanntlich äußerstschwierig, Unkräuter oder Schadgräser in solchen Kulturpflanzenbeständen zu bekämpfen, die mit den Un-kräutern in naher stammesgeschichtlicher Beziehung stehen, ohne daß die Kulturpflanzen selbstin Mitleidenschaft gezogen werden. Dies gilt insbesondere für Hirsearten in Mais oder Reis oderfür Acker-fuchsschwanz und Windhalm im Getreide. Ja, derartige Unkräuter haben sich vielfach auf den gedüngten Kulturpflanzenböden so üppig entwickelt, daß es vielerorts zu einer erheblichen Ertragsminderung beiden Kulturpflamzen gekomm en ist. Auch so bekannte Herbizide auf Basis N-alkoxylierter N-Phenyl-α-chloracetamide, wie z. B. LASSO® (eingetragenes W arenzeichen der Fa. Monsanto, Creve Cæur, USA, vgl. US-PSS 3 442 945 und 3 547 620) und TERIDOX® (eingetra-genes Warenzeichen der Fa. Ciba-Geigy AG, Basel, vgl. DE-PS 23 05 495), sind für derartige Zwecke nichtgeeignet.

Aus diesem Grundeist manin der Landwirtschaftsehr an Herbiziden interessiert, die gerade in Getreidekulturen eingesetzt werden können.

Aufgabe der vorliegenden Erfindung war es demnach, hoch selektive Herbizide auf der Basis von N,N-disubstituierten Acetamiden zu ent-wickeln.

Es wurde jetzt gefunden, daß die in den Ansprüchen 1 bis 3 aufgeführ-ten in α-Stellung veretherten N-(3,3,5- und/oder 3,5,5-Trimethyl-cyclohexen-1-yl)-acetamide hervorragende Herbizide mit einem inter-essanten Selektivitätsspektrum darstellen.

Gegenstand dieser Erfindung sind ferner ein Verfahren zur Herstellung dieser Verbindungen, ein Verfahren zur selektiven Behandlung von Kulturpflanzenkulturen und die Verwendung dieser Acetamide in phyto-toxischen Zubereitungen und als Wachstumsregler.

Die erfindungsgemäßen Verbindungen entfaltenim wesentlichen eine Wirkung als Herbizid. Daneben konnte aber auch einfungizider und bakterizider Effektnachgewiesen werden.

Die erfindungsgemäßen Verbindungen zeigen eine deutiiche Wuchshem-mung bei verschiedenen Kulturpflanzen, wie Soja, Baumwolle, Reis und Getreidearten, so daß diese Verbindungen auch als Wachstumsregler in der landwirtschaftlichen Praxis Verwendungfinden können.

Die Verbindungen wirken sowohl im Vor- als auch im Nachauflaufver-fahren gegen Schadgräser, zum Teil auch gegen zweikeimblättrige Un-kräuter.

Die Darstellung erfolgt in 3 Stufen gemäß dem nachfolgenden Schema:

I. 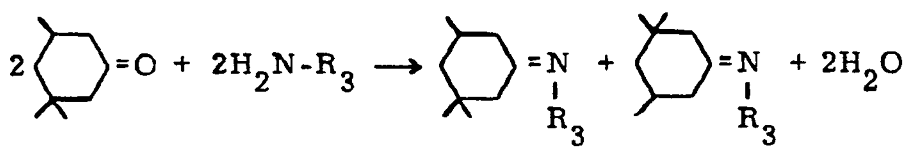

II. 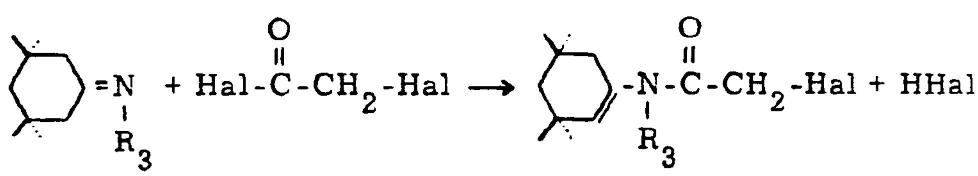

III. 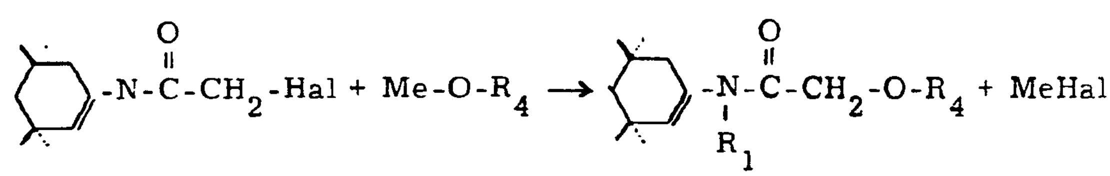

Die Umsetzungen I und II sind bereits ausführlich in der DE-OS 28 56 651 beschrieben worden.

Als Ausgangsprodukt wird das technisch leicht zugängliche 3,3,5-Tri-methylcyclohexanon eingesetzt. Die Schiff'sche Base, das Reaktions-produkt der 1. Stufe, fällt als Isomerengemisch an; der Substituent $R_3$ kannin

syn- oder anti-Stellung zur geminalen Dimethylgruppe des Cyclohexenrings stehen. Als Reagenz wirdin der Stufe II ein Halogeno-acetylhalogenid eingesetzt; bevorzugt wird Chloracetylchlorid Hal be-deutet hier Chlor oder Brom. Das erhaltene Enamid liegt wiederum als Isomerengemisch vor.

Die 3. Stufe verläuft formal nach dem Prinzip der Williamson'schen Ethersynthese: Ein Alkalialkoholat oder -phenolat wird mit dem α-Halogenacetamid zu den Endprodukten umgesetzt. Meistein Alkali-metall, vorzugsweise Natrium. Diese Reaktion wird zweckmäßiger-weisein einem Lösungsmittel, wie z. B. einem aliphatischen, cyclo-aliphatischen oder aromatischen Kohlenwasserstoff, Alkohol oder Ether mit 5 bis 20 C-Atomen, durchgeführt. Es hat sich als besonders praktisch erwiesen, als Lösemittel einen Alkohol der Formel $R_4OH$ zu verwenden, wobei $R_4$ die unten angegebene Bedeutung hat, und die-sem gegebenenfalls -zur Erhöhung des Siedepunktes - einen Aromaten mit einem Siedepunkt über 100 °C zuzusetzen. Die Reaktion wird zwi-schen 20 und 150 °C, üblicherweise zwischen 80 und 120° C, durchege-führt.

Nach Abschluß der Reaktion wird üblicherweise das ausgefallene Alka-lihalogenid abgetrennt und das Lösemittel destillativ entfernt. Handelt es sich um feste Endprodukte, werden diese aus geeigneten Lösemitteln, wie z. B. Form amid, Alkoholen oder Aromaten, umkristalli-siert. Sind die Endprodukteflüssig, werden sie am besten aufdestilla-tivem Wege gereinigt.

Das Endproduktfällt wiederum in Form eines Isomerengemisches an, wobei die geminale Dimethylgruppe in 3 - oder in 5-Stellung zur Dop-pelbindung des Cyclohexenrings stehen kann. In dieser Form wird das Produkt auch bevorzugt eingesetzt.

Der Cyclohexenring kann in 3,3,5- und/oder in 3,5,5-Stellung tri-methyliert sein. $R_3$ ist ein verzweigter oder geradkettiger Alkylrest mit 1 bis 4 C-Atomen oderbevorzugtder Allylrest. $R_4$kann die Be-deutung von $R_3$ haben oder ein durch Chloratome oder $R_3$ substituierter Phenylrest, insbesondere der 2,4-Dichlorphenylrest sein.

**Beispiel 1**

N-(3,3,5- und 3,5,5-Trimethylcyclohexen-1-yl)-N-ethyl-α-ethoxy-acetamid

4,6 g Natrium werdenin 200 ml absolutem Ethanolgelöstund anschlie-ßend bei 20 °C 48,7 g N-(3,3,5- und 3,5,5-Trimethylcyclohexen-1-yl)-N-ethyl-α-chloracetamid zugegeben. Man erwärmt auf 60° C, hält acht Stunden bei dieser Temperatur, filtriert 8,2 g Natriumchlorid ab und erhalt durch Destillation des Filtrats 37 g des gewünschten Ethoxyacetamids.

Siedepunkt: 109 °C (1,3 mbar)

$n_D^{20}$ : 1,4740

Ausbeute: 73 %

**Beispiel 2**

N-(3,3,5- und 3,5,5-Trimethylcyclohexen-1-yl)-N-ethyl-α-phenoxy-acetamid

14,1 g Phenol werden in 20 ml wasser gelöst und nach Zugabe von 6 g festem Ätznatron mit 200 ml Toluol solange am Wasserabscheider ge-kocht, bis alles Wasser azeotrop entfernt ist. Nach Eindampfen bis 60 °C und versetzt mit 36,5 g N-(3,3,5- und 3,5,5-Trimethylcyclo-hexen-1-yl)-N-ethyl-α-chloracetamid. Nach acht Stunden bei 60° C des gewünschten Phenoxyacetamids.

Siedepunkt: 129 °C (1,3 mbar)

$n_D^{20}$ : 1,5370

Ausbeute: 82 %

**Beispiel 3**

N-(3,3,5- und 3,5,5-Trimethylcyclohexen-1-yl)-N-allyl-α-2,4-di-chlorphenoxyacetamid 32,6 g 2,6-Dichlorphenol werden mit 20 ml Wasser und 8 g Natrium hydroxid versetzt und mit 200 ml Toluol bis zur Beendigung der Ab-' scheidung am Wasserabscheider gekocht. Die erhaltene Aufschläm-mung des Phenolats wird mit 51 g N-(3,3, 5- und 3, 5, 5-Trimethyl-cyclohexen-1-yl)-N-allyl-α-chloracetamid vermischt und nach zwei Stunden bei 70 °C mit zweimal je 100 ml Wasser ausgeschüttelt. Das Lösemittel der verbleibenden organischen Phase wird abdestilliert. Man erhält 55 g des gewünschten Produktes als flüssigen Rückstand.

$n_D^{20}$ : 1,5127

Ausbeute: 72%

In der nachfolgenden Tabelle sind Ausbeuten und Eigenschaften erfin-dungsgemäß hergestellter Acetamide angegeben.

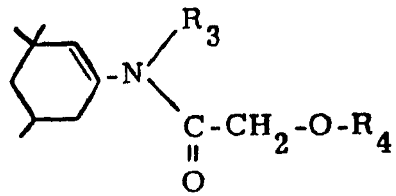

| $R_3$ | $R_4$ | $Kp_{1,3}$ °C | $n_D^{20}$ | Ausbeute % | Mol - Gew. | N % | Cl % |
|---|---|---|---|---|---|---|---|
| $CH_3$- | $CH_3$- | 110 - 4 | 1,4775 | 71 | 245 | 6,2 | |
| | $C_2H_5$- | 110 - 20 | 1,4735 | 85 | 250 | 5,8 | |
| | $(CH_3)_2CH$- | 118 - 21 | 1,4702 | 63 | 295 | 5,5 | |
| $C_2H_5$- | $CH_3$- | 109 - 10 | 1,4770 | 73 | 235 | 5,7 | |
| | $C_2H_5$- | 108 - 10 | 1,4740 | 73 | 240 | 5,6 | 1) |
| | $(CH_3)_2CH$- | 101 - 2 | 1,4715 | 64 | 250 | 5,4 | |
| | $CH_2=CH-CH_2$- | 115 - 8 | 1,4825 | 65 | 260 | 5,3 | |
| | $C_6H_5$- | 128 - 30 | 1,5180 | 82 | 265 | 4,7 | 2) |
| | 2,4-$Cl_2$-$C_6H_3$- | 160 - 70 | 1,5370 | 82 | 330 | 3,9 | 18,5 |
| $(CH_3)_2CH$- | $CH_3$- | 133 - 6 | 1,4751 | 34 | 255 | 5,6 | |
| | $C_2H_5$- | 140 - 2 | 1,4732 | | 290 | 5,3 | |
| | $(CH_3)_2CH$- | 122 | 1,4718 | 78 | | | |
| | $(CH_3)_3C$- | | 1,4628 | 90 | | 4,2 | |

| $R_3$ | $R_4$ | $Kp_{1,3}$ °C | $n_D^{20}$ | Ausbeute % | Mol-Gew. | N % | Cl % |
|---|---|---|---|---|---|---|---|
| $(CH_3)_2CH-$ | $2,4-Cl_2-C_6H_3-$ | | | 92 | 295 | 3,3 | 18,5 |
| | $2,6-tb_2-C_6H_3-$ | >160 | 1,5070 | 30 | | 4,0 | 4) |
| | $4-CH_3-2,6-tb_2-C_6H_2-$ | >160 | | 19 | 415 | 4,0 | 4) |
| $C_4H_9$ | $CH_3-$ | 136 - 40 | 1,4744 | 80 | | | |
| | $C_2H_5-$ | 154 - 7 | 1,4782 | 75 | | | |
| | $(CH_3)_2-CH-$ | 152 - 8 | 1,4762 | 72 | | | |
| $(C_2H_5)(CH_3)CH-$ | $CH_3-$ | 135 - 7 | 1,4770 | 83 | 295 | 5,1 | |
| | $C_2H_5-$ | 135 - 8 | 1,4752 | 75 | 230 | 4,8 | |
| | $(CH_3)_2CH-$ | 138 - 40 | 1,4708 | 71 | 230 | 4,6 | |
| $CH_2=CH-CH_2-$ | $CH_3-$ | 113 - 8 | 1,4823 | 82 | 240 | 5,4 | |
| | $C_2H_5-$ | 115 | 1,4855 | 44 | 240 | 4,9 | |
| | $(CH_3)_2CH-$ | 120 | 1,4960 | 62 | 250 | 5,1 | |
| | $CH_2=CH-CH_2-$ | 115 | 1,4850 | 51 | 250 | 4,9 | |
| | $C_6H_5-$ | | 1,5298 | 52 | 220 | 3,7 | |
| | $2,4-Cl_2-C_6H_3-$ | | 1,5127 | 72 | 240 | 4,1 | 16,1 3) |

1) siehe Beispiel 1
2) siehe Beispiel 2
3) siehe Beispiel 3
4) tb = tert.-Butyl

Die erfindungsgemäßen Acetamide werden üblicherweise in Form phytotoxischer Zubereitungen eingesetzt. Diese enthalten mindestens ein Hilfsmittel und können flüssig, pastös oder fest sein. Bezüglich Einzelheiten wird auf die DE-OS 28 56 651 verwiesen. Es hat sich als besonders günstig erwiesen, die Acetamide in Form ihrer verdünnten wäßrigen Lösungen einzusetzen.

Zur Erprobung der Wirksamkeit wurden folgende ein- und zweikeim-blättrige Pflanzen im Gewächshaus herangezogen:

Sinapis arvensis - Ackersenf = SINAR
Solanum lycopersicum - Tomate = SOLLY
Stellaria media - Vogelmiere = STEME
Galum aparine - Klettenlabkraut = GALAP
Centaurea cyanus - Kornblume = CENCY
Matricaria maritima - Strandkamille = MATMA
Lamium amplexicaule - Stengelumfassende = LAMAM Taubnessel
Beta vulgaris - Zuckerrübe = BETVU
Brassica napus - Winterraps = BRANA
Amaranthus retroflexus - Amaranth = AMARE
Soja hispida - Soja = SOJHI
Gossipium herbaceum - Baumwolle = GOSHE
Echinochloa crus-galli - Hühnerhirse = ECHCG
Avena sativa - Hafer = AVESA
Avena fatua - Flughafer = AVEFA
Alopecurus myosuroides - Ackerfuchsschwanz = ALOMY
Hordeum vulgare - Gerste = HORVU
Triticum aestivum - Weizen = TRIAE
Zea mays - Mais = ZEAMA
Setaria glauca - Grüne Borstenhirse = SETGL
Digitaria sanguinalis - Bluthirse = DIGSA
Apera spica-venti - Windhalm = APESV
Secale cereale - Roggen = SECCE
Oryza sativa - Reis = ORYSA

Die Applikation der erfindungsgemäße Acetamide erfolgte in Form wäßriger Suspensionen. 1 000 l Lösung, die 0,25 bis 10 kg, vorzugs-weise 0,5 bis 3 kg, der Wirkstoffe enthielten, wurden pro Hektar ver-spritzt. Im Vorauflauf wurde die Suspension auf die Bodenoberfläche appliziert, im Nachauflauf auf die Blattoberfläche im zweiten bis dritten Blattstadium der Testpflanzen.

Nach 14 Tagen (zweikeimblättrige Pflanzen) bzw. 3 Wochen (einkeim-blättrige Pflanzen) wurde der herbizide Effekt ermittelt. Dabei bedeu-tet:

1 = volle Wirkung; Abtötung der Pflanzen
5 = keine Wirkung; Pflanzen wie unbehandelt

Die Ergebnisse in den nachfolgenden Tabellen zeigen, daß die erfin-dungsgemäßen Verbindungen eine sehr gute Wirkung insbesondere ge-gen Schadgräser, wie Ackerfuchsschwanz (Alopecurus myosuroides), Windhalm (Apera spica-venti), Hühnerhirse (Echinochloa crus-galli), Bluthirse (Digitaria sanguinalis) und Borstenhirse (Setaria glauca), aufweisen.

In Vergleichsversuchen wurden folgende Mittel eingesetzt:

Vergleichsmittel A: LASSO® (N-(2, 6-Diethylphenyl) -N-methoxy-methyl-α-chloracetamid)
Vergleichsmittel B: TERIDOX® (N-(2, 6-Dimethylphenyl) -N-methoxy-ethyl-α-chloracetamid)
Vergleichsmittel C: RANDOX® (N, N -Diallyl-α-chloracetamid) (Hersteller: Monsanto. Die Tatsache, daß in der Bundesrepublik Deutschland kein eingetragenes Warenzeichen vorliegt, schließt nicht aus, daß in anderen Staaten ein Warenzeichenschutz vor-liegen kann.)
Vergleichsmittel D: N-(3, 3, 5- und 3, 5, 5-Trimethylcyclohexen-1-yl)-N - allyl- α chloracetamid

Die Wirkung der erfindungsgemäßen Verbindungen ist besser als die der Vergleichsmittel oder diesen ebenbürtig. Die neuen Acetamide zeigen eine hervorragende Selektivität bei einer Reihe von dikotylen Kultur-pflanzen, wie Soja, Winterraps und Zuckerrüben, und bei Kultur-pflanzen aus der Familie der Gräser, wie Weizen, Gerste, Hafer, Roggen, Mais und Reis. Dieses breite Selektivitätsspektrum wird von keinem Vergleichsmittel erreicht.

**Tabelle 1a**

Herbizide Wirkung gegen Gräser (Voraulaf)

| 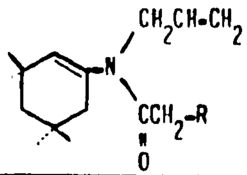 | Wirkstoff kg/ha | ECHCG | AVESA | AVEFA | ALOMY | HORVU | TRIAE | ZEAMA | SETCL | DIGSA | APESV | SECCE | ORYSA |
|---|---|---|---|---|---|---|---|---|---|---|---|---|---|
| $-OCH_3$ | 4 | 1 | 1 | 1 | 1 | 4 | 4 | 5 | 1 | 1 | 1 | 4 | 4 |
| | 3 | 1 | 2 | 1 | 1 | 4 | 4 | | 1 | 1 | 1 | 4 | 4 |
| | 2 | 1 | 4 | 1 | 1 | 4 | 4 | | 1 | 1 | 1 | 5 | 5 |
| | 1 | 1 | 4 | 1 | 1 | 5 | 5 | | 1 | 1 | 1 | | |
| $-OC_2H_5$ | 4 | 1 | 2 | 1 | 1 | 5 | 5 | 5 | 1 | 1 | 1 | 5 | 4 |
| | 3 | 1 | 2 | 1 | 1 | | | | 1 | 1 | 1 | | 4 |
| | 2 | 1 | 3 | 1 | 1 | | | | 1 | 1 | 1 | | 4 |
| | 1 | 1 | 4 | 2 | 1 | | | | 1 | 1 | 1 | | 4 |
| $-O-CH(CH_3)-CH_3$ | 4 | 1 | 1 | 1 | 1 | 3 | 3 | 5 | 1 | 1 | 1 | 1 | 4 |
| | 3 | 1 | 2 | 1 | 1 | 4 | 4 | | 1 | 1 | 1 | 2 | 5 |
| | 2 | 1 | 2 | 1 | 1 | 4 | 4 | | 1 | 1 | 1 | 3 | |
| | 1 | 1 | 3 | 1 | 1 | 4 | 5 | | 1 | 1 | 1 | 4 | |
| 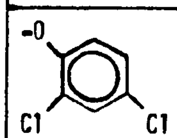 | 4 | 1 | 2 | 1 | 1 | 3 | 5 | 5 | 1 | 1 | 1 | 2 | 5 |
| | 3 | 1 | 2 | 1 | 1 | 5 | | | 1 | 1 | 1 | 2 | |
| | 2 | 1 | 2 | 1 | 1 | | | | 1 | 1 | 1 | 2 | |
| | 1 | 1 | 3 | 1 | 1 | | | | 1 | 1 | 1 | 3 | |

**Tabelle 1b**

Herbizide Wirkung gegen Gräser (Nachauflauf)

| 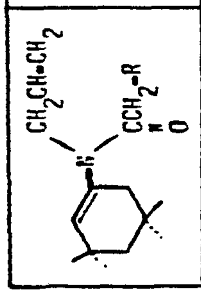 | Wirkstoff kg/ha | ECHCG | AVESA | AVEFA | ALOMY | HORVU | TRIAE | ZEAMA | SETCL | DIGSA | APESV | SECCE | ORYSA |
|---|---|---|---|---|---|---|---|---|---|---|---|---|---|
| $-OCH_3$ | 4 | 1 | 5 | 4 | 1 | 5 | 5 | 5 | 1 | 1 | 1 | 5 | 5 |
| | 3 | 1 | | 5 | 1 | | | | 1 | 1 | 1 | | |
| | 2 | 1 | | | 1 | | | | 1 | 2 | 2 | | |
| | 1 | 1 | | | 1 | | | | 1 | 3 | 4 | | |
| $-OC_2H_5$ | 4 | 1 | 4 | 4 | 1 | 5 | 5 | 5 | 1 | 1 | 1 | 5 | 5 |
| | 3 | 1 | 5 | 4 | 1 | | | | 1 | 1 | 1 | | |
| | 2 | 1 | | 5 | 1 | | | | 1 | 2 | 2 | | |
| | 1 | 1 | | | 1 | | | | 1 | 2 | 4 | | |
| $-O-CH(CH_3)-CH_3$ | 4 | 1 | 3 | 3 | 1 | 5 | 5 | 5 | 1 | 1 | 1 | 2 | 3 |
| | 3 | 1 | 4 | 3 | 1 | | | | 1 | 1 | 1 | 3 | 5 |
| | 2 | 1 | 5 | 3 | 1 | | | | 1 | 1 | 1 | 3 | |
| | 1 | 1 | | 3 | 1 | | | | 1 | 1 | 2 | 4 | |
| 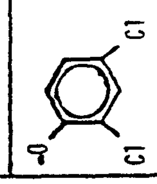 | 4 | 1 | 4 | 3 | 1 | 4 | 4 | 5 | 1 | 1 | 1 | 4 | 5 |
| | 3 | 1 | 4 | 3 | 1 | 5 | 5 | | 1 | 1 | 1 | 4 | |
| | 2 | 1 | 5 | 4 | 1 | | | | 1 | 1 | 1 | 4 | |
| | 1 | 1 | | 4 | 1 | | | | 1 | 1 | 1 | 5 | |

**Tabelle 2a**

Herbizide Wirkung gegen Dikotyledonen (Vorauflauf)

| 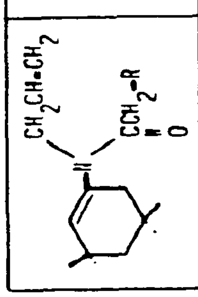 | Wirk-stoff kg/ha | SINAR | LYCES | STEME | GALAP | CENCY | MATMA | LAMAM | ALTVU | BRANA | AMARE | SOJHI | GOSHE |
|---|---|---|---|---|---|---|---|---|---|---|---|---|---|
| $-OCH_3$ | 4 | 5 | 5 | 5 | 4 | 4 | 5 | 5 | 5 | 5 | 2 | 5 | 5 |
| | 3 | | | | | | | | | | 2 | | |
| | 2 | | | | | | | | | | 4 | | |
| | 1 | | | | | | | | | | | | |
| $-OC_2H_5$ | 4 | 5 | 5 | 5 | 4 | 4 | 5 | 5 | 5 | 5 | 2 | 5 | 5 |
| | 3 | | | | | | | | | | 2 | | |
| | 2 | | | | | | | | | | 3 | | |
| | 1 | | | | | | | | | | 3 | | |
| $-OCH(CH_3)-CH_3$ | 4 | 5 | 5 | 5 | 2 | 5 | 5 | 5 | 5 | 5 | 2 | 5 | 5 |
| | 3 | | | | 3 | | | | | | 3 | | |
| | 2 | | | | 4 | | | | | | 3 | | |
| | 1 | | | | 4 | | | | | | 5 | | |
| 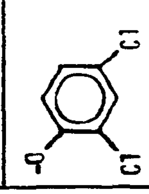 | 4 | 5 | 4 | 5 | 4 | 4 | 5 | 5 | 5 | 5 | 2 | 5 | 5 |
| | 3 | | | | | | | | | | 2 | | |
| | 2 | | | | | | | | | | 2 | | |
| | 1 | | | | | | | | | | 2 | | |

**Tabelle 2b**

Herbizide Wirkung gegen Dikotyledonen (Nachauflauf)

| 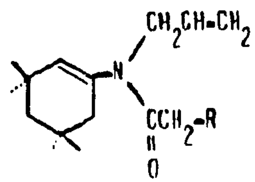 | Wirk-stoff kg/ha | SINAR | LYCES | STEME | GALAP | CENCY | MATMA | LAMAM | BETVU | BRANA | AMARE | SOJHI | GOSHE |
|---|---|---|---|---|---|---|---|---|---|---|---|---|---|
| $-OCH_3$ | 4 | 3 | 3 | 5 | 2 | 4 | 5 | 4 | 5 | 4 | 5 | 5 | 5 |
| | 3 | 5 | 5 | | 2 | | | | | | | | |
| | 2 | | | | 4 | | | | | | | | |
| | 1 | | | | | | | | | | | | |
| $-OC_2H_5$ | 4 | 3 | 3 | 5 | 2 | 4 | 5 | 4 | 5 | 4 | 4 | 5 | 5 |
| | 3 | 5 | 5 | | 2 | | | | | | | | |
| | 2 | | | | 3 | | | | | | | | |
| | 1 | | | | 5 | | | | | | | | |
| $-OCH-CH_3$<br>$CH_3$ | 4 | 3 | 3 | 5 | 1 | 5 | 5 | 5 | 5 | 5 | 4 | 5 | 5 |
| | 3 | | | | 1 | | | | | | | | |
| | 2 | | | | 3 | | | | | | | | |
| | 1 | | | | 4 | | | | | | | | |
| 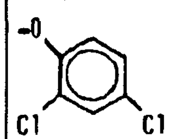 | 4 | 1 | 1 | 5 | 2 | 4 | 5 | 5 | 2 | 1 | 1 | 4 | 5 |
| | 3 | 1 | 1 | | 2 | | | | 2 | 2 | 2 | 5 | |
| | 2 | 1 | 1 | | 3 | | | | 2 | 3 | 2 | | |
| | 1 | 1 | 2 | | 4 | | | | 3 | 4 | 2 | | |

**Tabelle 3a**

Herbizide Wi.·kung gegen Gräser (Vorauflauf)

| 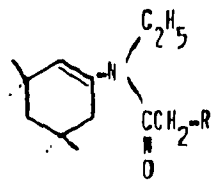 | Wirk-stoff kg/ha | ECHCG | AVESA | AVEFA | ALOMY | HORVU | TRIAE | ZEAMA | SETGL | DIGSA | ALESV | SECCE | ORYSA |
|---|---|---|---|---|---|---|---|---|---|---|---|---|---|
| $-OC_2H_5$ | 4 | 1 | 5 | 5 | 1 | 5 | 5 | 5 | 1 | 1 | 1 | 1 | 4 |
| | 3 | 1 | | | 1 | | | | 1 | 1 | 1 | 1 | 4 |
| | 2 | 1 | | | 1 | | | | 1 | 1 | 1 | 1 | 5 |
| | 1 | 1 | | | 1 | | | | 1 | 1 | 1 | 1 | |
| $-O-CH-CH_3$<br>$CH_3$ | 4 | 1 | 4 | 4 | 1 | 5 | 5 | 5 | 1 | 1 | 1 | 1 | 4 |
| | 3 | 1 | 4 | 4 | 1 | | | | 1 | 1 | 1 | 1 | 5 |
| | 2 | 1 | 5 | 5 | 1 | | | | 1 | 1 | 1 | 1 | |
| | 1 | 1 | | | 1 | | | | 1 | 1 | 1 | 1 | |
| $-OCH_2CH=CH_2$ | 4 | 1 | 4 | 4 | 1 | 5 | 5 | 5 | 1 | 1 | 1 | 1 | 4 |
| | 3 | 1 | 4 | 5 | 1 | | | | 1 | 1 | 1 | 1 | 4 |
| | 2 | 1 | 4 | | 1 | | | | 1 | 1 | 1 | 1 | 5 |
| | 1 | 1 | 4 | | 1 | | | | 1 | 1 | 1 | 1 | |
| 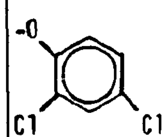 | 4 | 1 | 4 | 4 | 1 | 5 | 5 | 5 | 1 | 1 | 1 | 1 | 4 |
| | 3 | 1 | 5 | 5 | 1 | | | | 1 | 1 | 1 | 1 | 4 |
| | 2 | 1 | | | 1 | | | | 1 | 1 | 1 | 1 | 4 |
| | 1 | 1 | | | 1 | | | | 1 | 1 | 1 | 1 | 5 |

**Tabelle 3b**

Herbizide Wirkung gegen Gräser (Nachauflauf)

| 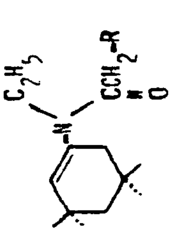 | Wirkstoff kg/ha | ECHCG | AVESA | AVEFA | ALOMY | HORVU | TRIAE | ZEAMA | SETGL | DIGSA | AGESV | SECCE | ORYSA |
|---|---|---|---|---|---|---|---|---|---|---|---|---|---|
| $-OC_2H_5$ | 4 | 1 | 5 | 5 | 1 | 4 | 5 | 5 | 1 | 1 | 1 | 1 | 4 |
| | 3 | 1 | | | 1 | 4 | | | 1 | 1 | 1 | 1 | 5 |
| | 2 | 1 | | | 1 | 4 | | | 3 | 2 | 2 | 3 | |
| | 1 | 2 | | | 1 | 5 | | | 3 | 3 | 2 | 3 | |
| $-O-CH(CH_3)-CH_3$ | 4 | 1 | | | 1 | 4 | 5 | 5 | 1 | 1 | 1 | 1 | 3 |
| | 3 | 1 | | | 1 | 5 | | | 1 | 1 | 1 | 1 | 4 |
| | 2 | 1 | | | 1 | | | | 3 | 2 | 2 | 2 | 4 |
| | 1 | 1 | | | 1 | | | | 5 | 2 | 3 | 4 | 5 |
| $-OCH_2CH=CH_2$ | 4 | 1 | | | 1 | 5 | 5 | 5 | 1 | 1 | 1 | 1 | 4 |
| | 3 | 1 | | | 1 | | | | 1 | 1 | 1 | 1 | 5 |
| | 2 | 1 | | | 1 | | | | 3 | 1 | 1 | 1 | |
| | 1 | 1 | | | 2 | | | | 3 | 3 | 2 | 2 | |
| 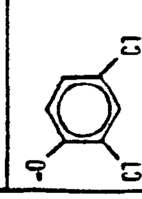 | 4 | 1 | 5 | 3 | 1 | 4 | 5 | 5 | 1 | 1 | 1 | 1 | 3 |
| | 3 | 1 | | 3 | 1 | 5 | | | 1 | 1 | 1 | 1 | 4 |
| | 2 | 1 | | 5 | 1 | | | | 2 | 1 | 1 | 1 | 5 |
| | 1 | 1 | | | 1 | | | | 2 | 1 | 1 | 1 | |

**Tabelle 4a**

Herbizide Wirkung gegen Gräser (Vorauflauf)

| 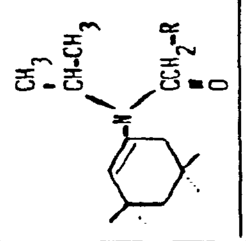 | Wirkstoff kg/ha | ECHCG | AVLSA | AVEFA | ALOMY | HORVU | TRIAE | ZEAMA | SETGL | DIGSA | APESV | SECCE | ORYSA |
|---|---|---|---|---|---|---|---|---|---|---|---|---|---|
| $-O-CHCH_3$<br>$CH_3$ | 4 | 1 | 5 | 1 | 1 | 5 | 5 | 5 | 1 | 1 | 1 | 1 | 3 |
| | 3 | 1 | | 1 | 1 | | | | 1 | 1 | 1 | 1 | 5 |
| | 2 | 1 | | 2 | 1 | | | | 1 | 1 | 1 | 1 | |
| | 1 | 1 | | 2 | 1 | | | | 1 | 2 | 2 | 1 | |
| $CH_3$<br>$-O-C-CH_3$<br>$CH_3$ | 4 | 1 | 5 | 1 | 1 | 5 | 5 | 5 | 1 | 1 | 1 | 1 | 5 |
| | 3 | 1 | | 3 | 2 | | | | 1 | 1 | 1 | 1 | |
| | 2 | 2 | | 3 | 4 | | | | 4 | 3 | 3 | 1 | |
| | 1 | 2 | | 5 | 4 | | | | 4 | 5 | 4 | 2 | |

**Tabelle 4b**

Herbizide Wirkung gegen Gräser (Nachauflauf)

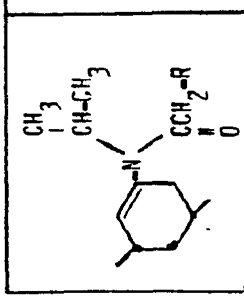

| R | Wirkstoff kg/ha | ECHCG | AVESA | AVEFA | ALOMY | HORVU | TRIAE | ZEAMA | SETGL | DIGSA | AI ESV | SECCE | ORYSA |
|---|---|---|---|---|---|---|---|---|---|---|---|---|---|
| $-O-CHCH_3$<br>$CH_3$ | 4 | 1 | 5 | 4 | 1 | 5 | 5 | 5 | 1 | 1 | 1 | 5 | 3 |
| | 3 | 1 | | 5 | 1 | | | | 1 | 2 | 2 | | 5 |
| | 2 | 2 | | | 3 | | | | 1 | 3 | 2 | | |
| | 1 | 5 | | | 4 | | | | 1 | 4 | 4 | | |
| $CH_3$<br>$-O-C-CH_3$<br>$CH_3$ | 4 | 1 | 5 | 5 | 2 | 5 | 5 | 5 | 1 | 1 | 1 | 5 | 5 |
| | 3 | 1 | | | 3 | | | | 1 | 3 | 3 | | |
| | 2 | 3 | | | 5 | | | | 3 | 3 | 5 | | |
| | 1 | 5 | | | | | | | 4 | 4 | | | |

**Tabelle 5a**

Herbizide Wirkung gegen Gräser (Vorauflauf)

| 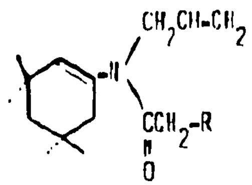 | Wirkstoff kg/ha | ECHCG | AVESA | AVEFA | ALOMY | HORVU | TRIAI | ZEAMA | SETGI | DIGSA | ALLSV | SECCE | ORYSA |
|---|---|---|---|---|---|---|---|---|---|---|---|---|---|
| $-OC_2H_5$ | 1 | 1 | 4 | 2 | 1 | 5 | 5 | 5 | 1 | 1 | 1 | 5 | 4 |
| | 0,5 | 1 | 5 | 5 | 1 | | | | 1 | 1 | 1 | | 4 |
| | 0,25 | 1 | | 4 | 2 | | | | 1 | 1 | 1 | | 5 |
| $-O-CH(CH_3)-CH_3$ | 1 | 1 | 3 | 1 | 1 | 4 | 5 | 5 | 1 | 1 | 1 | 4 | 5 |
| | 0,5 | 1 | 5 | 2 | 1 | 5 | | | 1 | 1 | 1 | 5 | |
| | 0,25 | 1 | | 4 | 2 | | | | 1 | 1 | 1 | | |
| 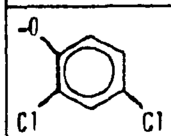 | 1 | 1 | 3 | 1 | 1 | 5 | 5 | 5 | 1 | 1 | 1 | 3 | 5 |
| | 0,5 | 1 | 5 | 2 | 1 | | | | 1 | 1 | 1 | 5 | |
| | 0,25 | 1 | | 4 | 1 | | | | 1 | 1 | 1 | | |
| Vergleichsmittel A | 1 | 1 | 2 | 1 | 1 | 2 | 1 | 5 | 1 | 1 | 1 | 1 | 1 |
| | 0,5 | 1 | 4 | 2 | 1 | 4 | 3 | | 1 | 1 | 1 | 3 | 3 |
| | 0,25 | 1 | 4 | 4 | 2 | 4 | 4 | | 1 | 1 | 1 | 4 | 3 |
| Vergleichsmittel B | 1 | 1 | 1 | 1 | 1 | 2 | 2 | 1 | 1 | 1 | 1 | 1 | 1 |
| | 0,5 | 1 | 2 | 2 | 1 | 3 | 3 | 3 | 1 | 1 | 1 | 2 | 2 |
| | 0,25 | 1 | 3 | 4 | 2 | 4 | 3 | 4 | 1 | 1 | 1 | 3 | 2 |

**Tabelle 5a - Fortsetzung**

Herbizide Wirkung gegen Gräser (Vorauflauf)

| 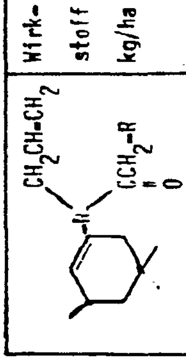 | Wirk-stoff kg/ha | ECHCG | AVESA | AVEFA | ALOMY | HORVU | TRIAE | ZEAMA | SETGL | DIGSA | APESV | SECCE | ORYSA |
|---|---|---|---|---|---|---|---|---|---|---|---|---|---|
| Vergleichsmittel C | 1 | 1 | 4 | 4 | 2 | 4 | 3 | 5 | 1 | 1 | 1 | 2 | |
| | 0,5 | 1 | 4 | 4 | 2 | 5 | 3 | | 1 | 1 | 1 | 4 | |
| | 0,25 | 3 | 5 | 5 | 4 | | 4 | | 1 | 3 | 1 | 4 | |
| Vergleichsmittel D | 1 | 1 | 2 | 2 | 1 | 2 | 2 | 2 | 1 | 1 | 1 | 1 | 1 |
| | 0,5 | 1 | 2 | 3 | 2 | 3 | 3 | 4 | 1 | 1 | 1 | 2 | 2 |
| | 0,25 | 1 | 3 | 4 | 3 | 4 | 3 | 5 | 2 | 2 | 2 | 4 | 2 |

**Tabelle 5b**

Herbizide Wirkung gegen Gräser (Nachauflauf)

| 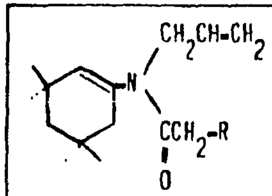 | Wirkstoff kg/ha | ECHCG | AVLSA | AVEFA | ALOMY | HORVU | TRIAE | ZEAMA | SETGL | DIGSA | AIESV | SECCE | ORYSA |
|---|---|---|---|---|---|---|---|---|---|---|---|---|---|
| $-OC_2H_5$ | 1 | 1 | 5 | 5 | 1 | 5 | 5 | 5 | 1 | 2 | 4 | 5 | 5 |
| | 0,5 | 1 | | | 1 | | | | 1 | 2 | 4 | | |
| | 0,25 | 1 | | | 3 | | | | 1 | 3 | 5 | | |
| 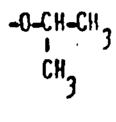 | 1 | 1 | 5 | 3 | 1 | 5 | 5 | 5 | 1 | 1 | 2 | 4 | 5 |
| | 0,5 | 1 | | 4 | 1 | | | | 1 | 1 | 2 | 5 | |
| | 0,25 | 1 | | 5 | 2 | | | | 1 | 1 | 3 | | |
| 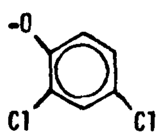 | 1 | 1 | 5 | 4 | 1 | 5 | 5 | 5 | 1 | 1 | 1 | 5 | 5 |
| | 0,5 | 1 | | 3 | 1 | | | | 1 | 1 | 1 | | |
| | 0,25 | 1 | | 4 | 1 | | | | 1 | 1 | 2 | | |
| Vergleichsmittel A | 1 | 1 | 2 | 2 | 1 | 2 | 2 | 5 | 1 | 1 | 1 | 2 | 2 |
| | 0,5 | 1 | 3 | 3 | 1 | 2 | 3 | | 1 | 1 | 2 | 3 | 2 |
| | 0,25 | 3 | 3 | 4 | 2 | 4 | 3 | | 2 | 3 | 2 | 3 | 4 |
| Vergleichsmittel B | 1 | 1 | 2 | 2 | 1 | 2 | 2 | 2 | 1 | 1 | 1 | 1 | 1 |
| | 0,5 | 1 | 4 | 2 | 1 | 3 | 3 | 4 | 1 | 1 | 2 | 3 | 3 |
| | 0,25 | 2 | 4 | 4 | 2 | 3 | 3 | 4 | 2 | 3 | 2 | 3 | 5 |

**Tabelle 5B - Forsetzung**

Herbizide Wirkung gegen Gräser (Nachauflauf)

| 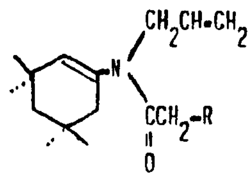 | Wirk-stoff kg/ha | ECHCG | AVESA | AVEFA | ALOMY | HORVU | TRIAE | ZEAMA | SETGL | DIGSA | APESV | SECCE | ORYSA |
|---|---|---|---|---|---|---|---|---|---|---|---|---|---|
| Vergleichsmittel C | 1 | 2 | 3 | 3 | 5 | 5 | 5 | 5 | 1 | 1 | 1 | 5 | |
| | 0,5 | 3 | 4 | 4 | | | | | 2 | 2 | 3 | | |
| | 0,25 | 4 | 5 | 5 | | | | | 2 | 3 | 5 | | |
| Vergleichsmittel D | 1 | 1 | 2 | 2 | 1 | 2 | 2 | 3 | 1 | 1 | 2 | 2 | 2 |
| | 0,5 | 1 | 3 | 2 | 2 | 3 | 3 | 5 | 1 | 2 | 3 | 3 | 4 |
| | 0,25 | 2 | 4 | 4 | 3 | 4 | 3 | | 2 | 3 | 4 | 4 | 5 |

**Patentansprüche:**

1. N-(3, 3, 5- und/oder 3, 5, 5-Trimethylcyclohexen-1-yl)-N-alkyl-α-alkoxyacetamide der allgemeinen Formel

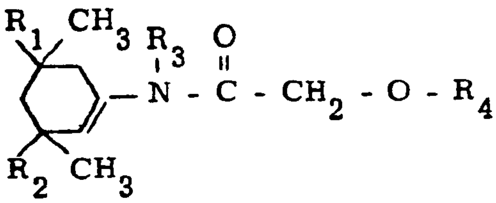

- wobei $R_1$ = H und $R_2$ = $CH_3$ oder
$R_1$ = $CH_3$ und $R_2$ = H ist und
- wobei $R_3$ ein Allyl- oder ein Alkylrest mit 1 bis 4 C-Atomen und
- wobei $R_4$ die Bedeutung von $R_3$ hat oder ein durch Chloratome oder $R_3$ substituierter Aromat sein kann.

2. Acetamide gemäß Anspruch 1,
dadurch gekennzeichnet,
daß $R_3$ der Allylrest ist.

3. Acetamide gemäß Anspruch 1,
dadurch gekepnzeichnet,
daß $R_4$ der 2, 4-Dichlorphenylrest ist.

4. Verfahren zur Herstellung der Acetamide gemäß den Ansprüchen 1 bis3, .
dadurch gekennzeichnet,
daß man die zugrundeliegenden α-Chloracetamide mit Alkalialko-holaten bzw. -phenolaten verethert.

5. Verfahren zur selektiven Behandlung von Nutzpflanzenkulturen vor und/oder nach dem Auflaufen der Saat,
dadurch gekennzeichnet,
daß man Acetamide nach den Ansprüchen 1 bis 3 verwendet.

6. Verwendung der Acetamide gemäß den Ansprüchen 1 bis 3 in phyto-toxischen Zubereitungen.

**Claims**

1. N-(3,3,5- and/or 3,5,5- Trimethylcyclohexen-1-yl)-N-alkyl-α-alkoxyacetamides of the general formula

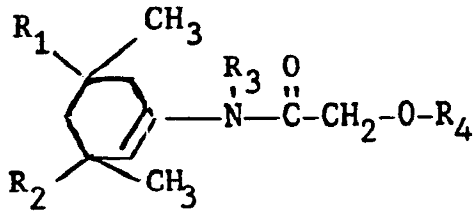

where $R_1$ is H and $R_2$ is $CH_3$ or $R_1$ is $CH_3$ and $R_2$ is H, $R_3$ is allyl or alkyl of 1 to 4 carbon atomatic has one of the meanings given for $R_3$ or is an aromatic radical substituted by chlorine or by any of the radicals mentioned for $R_3$.

2. Acetamides according to claim 1, characterised in that $R_3$ is allyl.

3. Acetamides according to claim 1, characterised in that $R_3$ is 2,4-dichlorophenyl.

4. A process for the production of an acetamide according to any of claims 1 to 3, characterised in that the corresponding α-chloroacetamide is etherified with an alkali metal alcoholate or phenolate.

5. A process for the selective treatment of crops of useful plants before and/or after emergence, characterised in that an acetamide according to any of claims 1 to 3 is used.

6. The use of an acetamide according to any of claims 1 to 3 in a phytotoxic preparation.

**Revendications**

1. Les N-(3,3,5- et/ou 3,5,5-triméthyl-cyclohexén-1-yl)-N-alkyl-alpha-alcoxy-acétamides de la formule géneralé

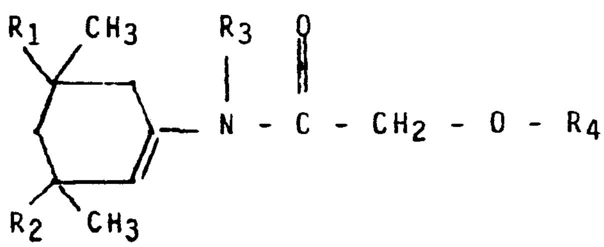

- dans laquelle $R_1$ = H et $R_2$ = CH3
ou
$R_1$ = $CH_3$ et $R_2$ = H, et
- dans laquelle $R_3$ est un radical allyle ou un radical alkyle contenant de 1 à 4 atomes de carbone,
et
- dans laquelle $R_4$ a la signification de $R_3$ ou peut étre un radical aromatique substitué par des atomes de chlore ou par R3.

2. Les acétamides selon la revendication 1, caractérisées par le fait que $R_3$ est le radical allyle.

3. Les acétamides selon evendication 1, caracterisees par le fait que $R_4$ est le radical 2,4-dichloro-phényle.

4. Procédé de préparation des acétamides selon les revendications 1 à 3,
caractérisées par le fait que l'on éthérifie les alpha-chlora-cétamides fondamentales par des alcoolates ou phénolates alca-lins.

5. Procédé de traitement sélectif de cultures de plantes utiles avant et/ou après la levee de la semence, caracterise par le fait que l'on utilise des acétarnides selon les revendications 1 à 3.

6. L'utilisation des acétamides selon les revendica-tions 1 à 3 dans des compositions phytotoxiques.